(19) **Europäisches Patentamt / European Patent Office / Office européen des brevets**

(11) **EP 4 329 381 A1**

(12) **EUROPEAN PATENT APPLICATION**
published in accordance with Art. 153(4) EPC

(43) Date of publication:
**28.02.2024  Bulletin 2024/09**

(21) Application number: **21937288.5**

(22) Date of filing: **20.04.2021**

(51) International Patent Classification (IPC):
**H04W 48/20** $^{(2009.01)}$

(52) Cooperative Patent Classification (CPC):
**H04W 48/20**

(86) International application number:
**PCT/CN2021/088514**

(87) International publication number:
**WO 2022/222043 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LI, Xiaolong
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **CELL RESELECTION METHOD, CELL RESELECTION APPARATUS, AND STORAGE MEDIUM**

(57)    The present discloses relates to a cell reselection method, a cell reselection apparatus, and a storage medium. The cell reselection method is executed by a terminal, and includes: receiving cell reselection parameter indication information sent by a network device, the cell reselection parameter indication information being used for indicating one or more cell reselection parameters; and performing cell reselection on the basis of the cell reselection parameter. By means of the present invention, a cell reselection scheme can be determined from multiple cell reselection schemes, and cell reselection is performed.

S11

transmitting cell reselection parameter indication information,
where the cell reselection parameter indication information is
configured to indicate one or more cell reselection parameters

FIG. 2

**Description**

**FIELD**

The present invention relates to the field of wireless communication technologies, and more particularly to a method for cell reselection, a device for cell reselection, and a storage medium.

**BACKGROUND**

In communication technologies, communication based on terrestrial network (TN) is typically supported. When the communication is based on the terrestrial network, a terminal mainly performs cell reselection according to criteria S and R. For example, when performing the cell reselection, the terminal may measure service qualities of neighboring cells according to a signal quality of each serving cell, rank measurement results of the neighboring cells based on criterion R, and perform reselection of a target cell according to the measurement results and the ranking result.

Non-terrestrial network (NTN) has been introduced into new generation of the communication technology. The NTN perform the communication based on a satellite. When the satellite moves or the terminal moves to an edge of coverage of the satellite, the terminal needs to perform the cell reselection, but in this case, the distance effect is not very obvious, and thus the terminal may perform the cell reselection too late and perform the cell reselection between different cells repeatedly. Therefore, the NTN introduces multiple cell reselection methods to avoid the delayed cell reselection of the terminal and the repetitive selection between the different cells. However, at present, no good solution has been disclosed on how to identify the best cell reselection method to be used from multiple cell reselection methods.

**SUMMARY**

In order to solve the problem in the related art, the present invention provides a method for cell reselection, a device for cell reselection, and a storage medium.

According to a first aspect of embodiments of the present invention, there is provided a method for cell reselection, performed by a terminal, including: receiving cell reselection parameter indication information transmitted by a network device, where the cell reselection parameter indication information is configured to indicate one or more cell reselection parameters; and performing the cell reselection based on the one or more cell reselection parameters.

In an embodiment, the one or more cell reselection parameters include time information about providing a service by a serving cell; performing the cell reselection based on the one or more cell reselection parameters includes: measuring a neighboring cell based on the time information about providing the service by the serving cell, and performing the cell reselection based on a measurement result.

In an embodiment, the one or more cell reselection parameters include time information about providing a service by a serving cell, and parameter information about the cell reselection performed by applying a criterion S, where the parameter information about the cell reselection performed by applying the criterion S includes a threshold value of a signal quality of the serving cell, and parameters for calculating a cell selection level and a cell selection quality; performing the cell reselection based on the one or more cell reselection parameters includes: measuring a neighboring cell based on the time information about providing the service by the serving cell and/or the signal quality of the serving cell, and performing the cell reselection based on a measurement result; in which measuring the neighboring cell based on the signal quality of the serving cell includes: triggering measurement on the neighboring cell in the case that the signal quality of the serving cell is greater than the threshold value of the signal quality of the serving cell.

In an embodiment, the one or more cell reselection parameters include time information about providing a service by a neighboring cell; performing the cell reselection based on the one or more cell reselection parameters includes: determining a target cell based on the time information about providing the service by the neighboring cell.

In an embodiment, the one or more cell reselection parameters include time information about providing a service by a neighboring cell, and parameter information about the cell reselection performed by applying a criterion R, where the parameter information about the cell reselection performed by applying the criterion R includes a cell signal quality value, a cell reselection hysteresis value, and a value determined by a temporary offset value; performing the cell reselection based on the one or more cell reselection parameters includes: determining a target cell based on the time information about providing the service by the neighboring cell and/or the criterion R, and performing the cell reselection based on the target cell determined.

In an embodiment, the cell reselection parameter indication information is configured to indicate one cell reselection parameter, wherein the one cell reselection parameter is parameter information about the cell reselection performed by applying an criterion R; performing the cell reselection based on the one or more cell reselection parameters includes: determining a target cell based on the criterion R, and performing the cell reselection based on the target cell determined.

In an embodiment, the one or more cell reselection parameters indicated by the cell reselection parameter indication information include a location parameter of a serving cell, where the location parameter of the serving cell includes at least one of a distance between the serving cell and the terminal, and a geographical location where the serving cell is located; performing the cell reselection based on the one or more cell reselection parameters includes: measuring a neighboring cell based on location information of the terminal and the location parameter of the serving cell, and performing the cell reselection based on a measurement result.

In an embodiment, the one or more cell reselection parameters indicated by the cell reselection parameter indication information include a location parameter of a serving cell, and parameter information about the cell reselection performed by applying a criterion S, where the location parameter of the serving cell includes at least one of a distance between the serving cell and the terminal, and a geographical location where the serving cell is located; performing the cell reselection based on the one or more cell reselection parameters includes: measuring a neighboring cell based on a signal quality of the serving cell, and at least one of location information of the terminal and the location parameter of the serving cell, and performing the cell reselection based on a measurement result.

In an embodiment, the one or more cell reselection parameters indicated by the cell reselection parameter indication information include a location parameter of a serving cell, and parameter information about the cell reselection performed by applying a criterion S, where the location parameter of the serving cell includes at least one of a distance between the serving cell and the terminal, and a geographical location where the serving cell is located; performing the cell reselection based on the one or more cell reselection parameters includes: measuring a neighboring cell based on signal quality of the serving cell, and performing the cell reselection based on a measurement result.

In an embodiment, the cell reselection parameter indication information is configured to indicate one cell reselection parameter, where the one cell reselection parameter is parameter information about the cell reselection performed by applying a criterion S; performing the cell reselection based on the one or more cell reselection parameters includes: measuring a neighboring cell based on signal quality of a serving cell, and performing the cell reselection based on a measurement result.

In an embodiment, the one or more cell reselection parameters indicated by the cell reselection parameter indication information include a location parameter of a neighboring cell, where the location parameter of the neighboring cell includes at least one of a distance between the neighboring cell and the terminal, and a geographical location where the neighboring cell is located; performing the cell reselection based on the one or more cell reselection parameters includes: determining a target cell based on location information of the terminal and the location parameter of the neighboring cell, and performing the cell reselection based on the target cell determined.

In an embodiment, the one or more cell reselection parameters indicated by the cell reselection parameter indication information include a location parameter of a neighboring cell, and parameter information about the cell reselection performed by applying a criterion R; performing the cell reselection based on the one or more cell reselection parameters includes: determining a target cell based on the criterion R, and at least one of location information of the terminal and the location parameter of the neighboring cell, and performing the cell reselection based on the target cell determined.

In an embodiment, the one or more cell reselection parameters indicated by the cell reselection parameter indication information include a location parameter of a neighboring cell, and parameter information about the cell reselection performed by applying a criterion R; performing the cell reselection based on the one or more cell reselection parameters includes: determining a target cell based on the criterion R, and performing the cell reselection based on the target cell determined.

In an embodiment, the method further includes: receiving a signaling indication, where the signaling indication is configured to indicate one or more cell reselection parameters among the one or more cell reselection parameters indicated by the cell reselection parameter indication information; performing the cell reselection based on the one or more cell reselection parameters includes: measuring a neighboring cell and/or determining a target cell based on the one or more cell reselection parameters indicated by the signaling indication, and performing the cell reselection based on the target cell determined.

In an embodiment, the one or more cell reselection parameters indicated by the cell reselection parameter indication information include a plurality of cell reselection parameters; performing the cell reselection based on the one or more cell reselection parameters includes: performing the cell reselection by selecting one or more cell reselection parameters among the plurality of cell reselection parameters indicated by the cell reselection parameter indication information based on configuration information of the terminal.

In an embodiment, the one or more cell reselection parameters indicated by the cell reselection parameter indication information include time information about providing a service by a serving cell, a location parameter of the serving cell, time information about providing a service by a neighboring cell, a location parameter of the neighboring cell, parameter information about the cell reselection performed by applying a criterion S, and parameter information about the cell reselection performed by applying a criterion R; and performing the cell reselection based on the one or more cell reselection parameters includes: performing the cell reselection based on the criterion S and the criterion R.

According to a second aspect of embodiments of the present invention, there is provided a method for cell reselection, performed by a network device, including: transmitting cell reselection parameter indication information, where the cell reselection parameter indication information is configured to indicate one or more cell reselection parameters.

In an embodiment, the one or more cell reselection parameters include at least one of: time information about providing a service by a serving cell, a location parameter of the serving cell, time information about providing a service by a neighboring cell, a location parameter of the neighboring cell, parameter information about the cell reselection performed by applying a criterion S, where the parameter information about the cell reselection performed by applying the criterion S includes parameters for calculating a cell selection level and a cell selection quality, and a threshold value of a signal quality of the serving cell, and parameter information about the cell reselection performed by applying a criterion R, where the parameter information about the cell reselection performed by applying the criterion R includes a cell signal quality value, a cell reselection hysteresis value and a value determined by a temporary offset value.

In an embodiment, the method further includes: transmitting a signaling indication, where the signaling indication is configured to indicate one or more cell reselection parameters among the one or more cell reselection parameters indicated by the cell reselection parameter indication information.

According to a third aspect of embodiments of the present invention, there is provided an apparatus for cell reselection, including: a receiving unit configured to receive cell reselection parameter indication information transmitted by a network device, where the cell reselection parameter indication information is configured to indicate one or more cell reselection parameters; and a processing unit configured to perform the cell reselection based on the one or more cell reselection parameters.

In an embodiment, the one or more cell reselection parameters include the time information about providing the service by the serving cell. The processing unit is configured to measure the neighboring cell based on the time information about providing the service by the serving cell.

In an embodiment, the one or more cell reselection parameters include time information about providing a service by a serving cell, and parameter information about the cell reselection performed by applying a criterion S, where the parameter information about the cell reselection performed by applying the criterion S includes parameters for calculating a cell selection level and a cell selection quality, and a threshold value of a signal quality of the serving cell. The processing unit is configured to measure a neighboring cell based on the time information about providing the service by the serving cell and/or the signal quality of the serving cell, where measuring the neighboring cell based on the signal quality of the serving cell includes: triggering measurement on the neighboring cell in a case that the signal quality of the serving cell is greater than the threshold value of the signal quality of the serving cell.

In an embodiment, the one or more cell reselection parameters include time information about providing a service by a neighboring cell. The processing unit is configured to determine a target cell based on the time information about providing the service by the neighboring cell, and perform the cell reselection based on the target cell determined.

In an embodiment, the one or more cell reselection parameters include time information about providing a service by a neighboring cell, and parameter information about the cell reselection performed by applying a criterion R, where and the parameter information about the cell reselection performed by applying the criterion R includes a cell signal quality value, a cell reselection hysteresis value, and a value determined by a temporary offset value. The processing unit is configured to determine a target cell based on the time information about providing the service by the neighboring cell and/or the criterion R, and perform the cell reselection based on the target cell determined.

In an embodiment, the cell reselection parameter indication information is configured to indicate one cell reselection parameter, where the one cell reselection parameter is parameter information about the cell reselection performed by applying a criterion R. The processing unit is configured to determine a target cell based on the criterion R, and perform the cell reselection based on the target cell determined.

In an embodiment, the one or more cell reselection parameters indicated by the cell reselection parameter indication information include a location parameter of a serving cell, where the location parameter of the serving cell includes at least one of a distance between the serving cell and the terminal, and a geographical location where the serving cell is located. The processing unit is configured to measure a neighboring cell based on the location information of the terminal and the location parameter of the serving cell, and perform the cell reselection based on a measurement result.

In an embodiment, the one or more cell reselection parameters indicated by the cell reselection parameter indication information include a location parameter of a serving cell, and parameter information about the cell reselection performed by applying a criterion S, where the location parameter of the serving cell includes at least one of a distance between the serving cell and the terminal, and a geographical location where the serving cell is located. The processing unit is configured to measure a neighboring cell based on the signal quality of the serving cell, and at least one of the location information of the terminal and the location parameter of the serving cell, and perform the cell reselection based on a measurement result.

In an embodiment, the one or more cell reselection parameters indicated by the cell reselection parameter indication information include a location parameter of a serving cell, and parameter information about the cell reselection performed by applying a criterion S, where the location parameter of the serving cell includes at least one of a distance between the serving cell and the terminal, and a geographical location where the serving cell is located. The processing unit is configured to measure a neighboring cell based on a signal quality of the serving cell, and perform the cell reselection based on a measurement result.

In an embodiment, the cell reselection parameter indication information is configured to indicate one cell reselection parameter, where the one cell reselection parameter is parameter information about the cell reselection performed by applying a criterion S. The processing unit is configured to measure a neighboring cell based on a signal quality of a serving cell, and perform the cell reselection based on a measurement result.

In an embodiment, the one or more cell reselection parameters indicated by the cell reselection parameter indication information include a location parameter of a neighboring cell, where the location parameter of the neighboring cell includes at least one of a distance between the neighboring cell and the terminal, and a geographical location where the neighboring cell is located. The processing unit is configured to determine a target cell based on location information of the terminal and the location parameter of the neighboring cell, and perform the cell reselection based on the target cell determined.

In an embodiment, the one or more cell reselection parameters indicated by the cell reselection parameter indication information include a location parameter of the neighboring cell, and parameter information about the cell reselection performed by applying a criterion R. The processing unit is configured to determine a target cell based on the criterion R, and at least one of location information of the terminal and the location parameter of the neighboring cell, and perform the cell reselection based on the target cell determined.

In an embodiment, the one or more cell reselection parameters indicated by the cell reselection parameter indication information include a location parameter of a neighboring cell, and parameter information about the cell reselection performed by applying a criterion R. The processing unit is configured to determine a target cell based on the criterion R, and perform the cell reselection based on the target cell determined.

In an embodiment, the present method further includes: receiving a signaling indication, where the signaling indication is configured to indicate one or more cell reselection parameters among the one or more cell reselection parameters indicated by the cell reselection parameter indication information. The processing unit is configured to measure a neighboring cell and/or determine a target cell based on the one or more cell reselection parameters indicated by the signaling indication.

In an embodiment, the one or more cell reselection parameters indicated by the cell reselection parameter indication information include a plurality of cell reselection parameters. The processing unit is configured to perform the cell reselection by selecting one or more cell reselection parameters among the plurality of cell reselection parameters indicated by the cell reselection parameter indication information based on configuration information of the terminal.

In an embodiment, the one or more cell reselection parameters indicated by the cell reselection parameter indication information include time information about providing a service by a serving cell, a location parameter of the serving cell, time information about providing a service by a neighboring cell, location parameter of the neighboring cell, parameter information about the cell reselection performed by applying a criterion S, and parameter information about the cell reselection performed by applying a criterion R. The processing unit is configured to perform the cell reselection based on the criterion S and the criterion R.

According to a fourth aspect of embodiments of the present invention, there is provided an apparatus for cell reselection, including: a transmitting unit configured to transmit cell reselection parameter indication information, where the cell reselection parameter indication information is configured to indicate one or more cell reselection parameters.

In an embodiment, the one or more cell reselection parameters include at least one of: time information about providing a service by a serving cell; a location parameter of the serving cell; time information about providing a service by a neighboring cell; a location parameter of the neighboring cell; parameter information about the cell reselection performed by applying a criterion S, where the parameter information about the cell reselection performed by applying the criterion S includes a threshold value of a signal quality of the serving cell, and parameters for calculating a cell selection level and a cell selection quality; and the parameter information about the cell reselection performed by applying a criterion R, where the parameter information about the cell reselection performed by applying the criterion R includes a cell signal quality value, a cell reselection hysteresis value and a value determined by a temporary offset value.

In an embodiment, the transmitting unit is further configured to: transmit a signaling indication, where the signaling indication is configured to indicate one or more cell reselection parameters among the one or more cell reselection parameters indicated by the cell reselection parameter indication information.

According to a fifth aspect of embodiments of the present invention, there is provided a device for cell reselection, including: a processor; and a memory for storing processor-executable instructions. The processor is configured to perform the method described in the first aspect or any one of embodiments of the first aspect.

According to a sixth aspect of embodiments of the present invention, there is provided a device for cell reselection, including: a processor; and a memory for storing processor-executable instructions. The processor is configured to perform the method described in the second aspect or any one of the embodiments of the second aspect.

According to a seventh aspect of embodiments of the present invention, there is provided a computer-readable storage medium having stored therein instructions that, when executed, cause the method described in the first aspect or any one of the embodiments of the first aspect to be performed.

According to an eighth aspect of embodiments of the present invention, there is provided a computer-readable storage medium having stored therein instructions that, when executed, cause the method described in the second aspect or any one of the embodiments of the second aspect to be performed.

The technical solutions provided by the embodiments of the present invention may include the following advantages. The terminal receives the cell reselection parameter indication information transmitted by the network device, and performs the cell reselection based on the cell reselection parameter indication information, where the cell reselection parameter indication information is configured to indicate one or more cell reselection parameters. Therefore, with the present invention, in the case of multiple solutions of the cell reselection exist, it is possible to determine the solution of the cell reselection and perform the cell reselection.

It is to be understood that both the foregoing general description and the following detailed description are explanatory only, and shall not be construed to limit the present invention.

## BRIEF DESCRIPTION OF THE DRAWINGS

The accompanying drawings, which are incorporated in and constitute a part of this specification, illustrate embodiments in line with the present invention and, together with the description, serve to explain the principle of the present invention.

FIG. 1 is a schematic diagram illustrating a wireless communication system according to an explanatory embodiment.

FIG. 2 is a flow chart illustrating a method for cell reselection according to an explanatory embodiment.

FIG. 3 is a flow chart illustrating a method for cell reselection according to an explanatory embodiment.

FIG. 4 is a flow chart illustrating a method for cell reselection according to an explanatory embodiment.

FIG. 5 is a flow chart illustrating a method for cell reselection according to an explanatory embodiment.

FIG. 6 is a flow chart illustrating a method for cell reselection according to an explanatory embodiment.

FIG. 7 is a flow chart illustrating a method for cell reselection according to an explanatory embodiment.

FIG. 8 is a flow chart illustrating a method for cell reselection according to an explanatory embodiment.

FIG. 9 is a flow chart illustrating a method for cell reselection according to an explanatory embodiment.

FIG. 10 is a flow chart illustrating a method for cell reselection according to an explanatory embodiment.

FIG. 11 is a flow chart illustrating a method for cell reselection according to an explanatory embodiment.

FIG. 12 is a flow chart illustrating a method for cell reselection according to an explanatory embodiment.

FIG. 13 is a flow chart illustrating a method for cell reselection according to an explanatory embodiment.

FIG. 14 is a flow chart illustrating a method for cell reselection according to an explanatory embodiment.

FIG. 15 is a flow chart illustrating a method for cell reselection according to an explanatory embodiment.

FIG. 16 is a flow chart illustrating a method for cell reselection according to an explanatory embodiment.

FIG. 17 is a flow chart illustrating a method for cell reselection according to an explanatory embodiment.

FIG. 18 is a flow chart illustrating a method for cell reselection according to an explanatory embodiment.

FIG. 19 is a block diagram illustrating an apparatus for cell reselection according to an explanatory embodiment.

FIG. 20 is a block diagram illustrating an apparatus for cell reselection according to an explanatory embodiment.

FIG. 21 is a block diagram illustrating a device for cell reselection according to an explanatory embodiment.

FIG. 22 is a block diagram illustrating a device for cell reselection according to an explanatory embodiment.

**DETAILED DESCRIPTION**

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of devices and methods in line with the aspects related to the present invention as recited in the appended claims.

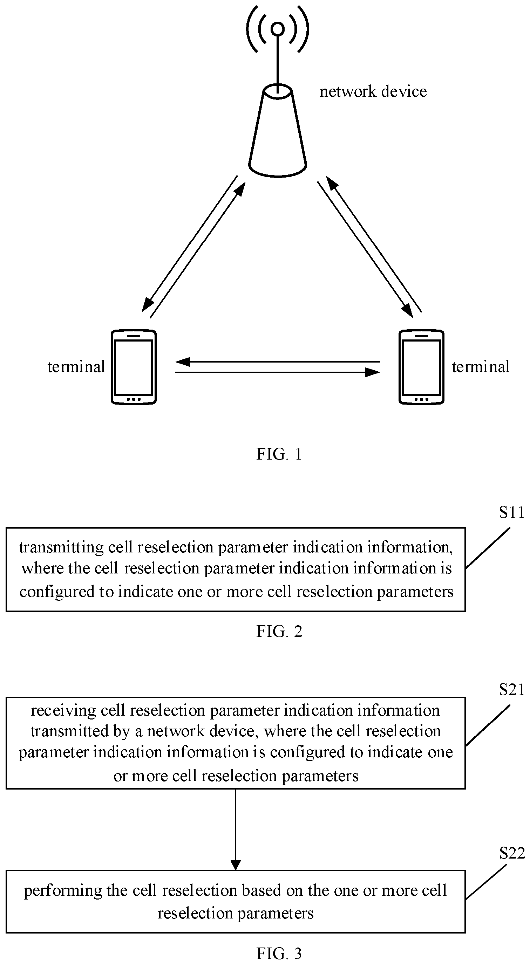

A method for cell reselection provided by embodiments of the present invention may be applied to a wireless communication system shown in FIG. 1. Referring to FIG. 1, the wireless communication system includes a terminal and a network device. A radio resource is used for transmitting and receiving information between the terminal and the network device.

It may be understood that the wireless communication system shown in FIG. 1 is only for schematic illustration. The wireless communication system may further include other network devices, such as core network devices, wireless relay devices, and wireless backhaul devices, which are not shown in FIG 1. The number of network devices and the number of terminals included in the wireless communication system are not limited in the embodiments of the present invention.

It may be further understood that the wireless communication system in the embodiments of the present invention is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be classified into a 2nd generation (2G) network, a 3G network, a 4G network, or a future evolution network, such as a 5G network which may also be referred to as a new radio (NR) network, according to capacity, rate, delay and other factors of the different networks. For ease of description, a wireless communication network will be abbreviated as a network in the present invention.

Further, the network device involved in the present invention may also be referred to as a radio access network device. The radio access network device may be a base station, an evolved node B, a home base station, an access point (AP) in a wireless fidelity (WIFI) system, a wireless relay node, a wireless backhaul node, a transmission point (TP), or a transmission and reception point (TRP), or may be a gNB in the NR system, or may be a component or a part of a device that constitutes a base station. The network device may further be a vehicle-mounted device when it is used in a vehicle to everything (V2X) communication system. It is to be understood that the specific technology and specific device form adopted by the network device are not limited in the embodiments of the present invention.

Further, the terminal involved in the present invention, which may also be referred to as a terminal device, a user equipment (UE), a mobile station (MS), a mobile terminal (MT), etc., is a device that provides voice and/or data connectivity to a user. For example, the terminal may be a handheld device or a vehicle-mounted device having a wireless connection function. At present, some examples of the terminal are a smart phone, a pocket personal computer (PPC), a palmtop computer, a personal digital assistant (PDA), a notebook computer, a tablet computer, a wearable device, a vehicle-mounted device, or the like. In addition, the terminal device may be the vehicle-mounted device when it is used in the vehicle to everything (V2X) communication system. It is to be understood that the specific technology and specific device form adopted by the terminal are not limited in the embodiments of the present invention.

The terminal may select or reselect a cell during communication with the network device. Embodiments of the present invention are applicable to processes for cell selection or the cell reselection. In the related art, for example, in the 5G NR, the criteria S and R are involved for the cell selection or the cell reselection.

Criterion S means that $S_{rxlev} > 0$ and $S_{qual} > 0$, where $S_{rxlev}$ is a cell selection level, and $S_{qual}$ is a cell selection quality. The cell selected or reselected by the terminal needs to meet the criterion S.

$S_{rxlev}$ is determined according to a measured cell reference signal received power (RSRP) value ($Q_{rxlevmeas}$), a minimum received level ($Q_{rxlevmin}$) required in a cell, a minimum received level offset ($Q_{rxlevminoffset}$), a cell power-related parameter ($P_{compensation}$), and an offset value ($Q_{offsettemp}$) temporarily applied to the cell. $P_{compensation}$ is used to penalize a UE which may not reach a maximum power of the cell. $P_{Compensation} = max(p_{Max} - p_{uMax}, 0)$ (dB), where

$p_{Max}$ is a maximum uplink transmission power of the UE allowed by the cell, and $p_{uMax}$ is a maximum uplink transmission power supported by capability of the UE. The formula is shown as follows.

$$S_{rxlev} = Q_{rxlevmeas} - (Q_{rxlevmin} + Q_{rxlevminoffset}) - P_{compensation} - Q_{offsettemp}$$

$S_{qual}$ is determined according to a measured cell reference signal received quality (RSRQ) value ($Q_{qualmeas}$), a minimum received signal quality ($Q_{qualmin}$), a minimum received signal received quality offset value ($Q_{qualminoffset}$), and $Q_{offsettemp}$. The formula is shown as follows.

$$S_{qual} = Q_{qualmeas} - (Q_{qualmin} + Q_{qualminoffset}) - Q_{offsettemp}$$

Further, parameters of $S_{rxlev}$, $S_{qual}$, $Q_{rxlevmeas}$, $Q_{rxlevmin}$, $Q_{rxlevminoffset}$, $Q_{offsettemp}$, $Q_{qualmeasp}$, $Q_{qualmin}$, $Q_{qualminoffset}$, $P_{compensation}$ may be seen in Table 1 below.

Table 1

| | |
|---|---|
| $S_{rxlev}$ | Cell selection RX level value (dB) |
| $S_{qual}$ | Cell selection quality value (dB) |
| $Q_{offsettemp}$ | Offset temporarily applied to a cell as specified in TS 38.331 [3] (dB) |
| $Q_{rxlevmeas}$ | Measured cell RX level value (RSRP) |
| $Q_{qualmeas}$ | Measured cell RX level value (RSRP) |
| $Q_{rxlevmin}$ | Minimum required RX level in the cell (dBm). If the UE supports a supplimentary uplink (SUL) frequency for this cell, $Q_{rxlevmin}$ is obtained from q-RxLevMinSUL, if present, in SIB 1, SIB2 and SIB4, additionally, if $Q_{rxlevminoffsetcellSUL}$ is present in SIB3 and SIB4 for the concerned cell, this cell specific offset is added to the corresponding $Q_{rxlevmin}$ to achieve the required minimum RX level in the concerned cell; else $Q_{rxlevmin}$ is obtained from q-RxLevMin in SIB1, SIB2 and SIB4, additionally, if $Q_{rxlevminoffsetcell}$ is present in SIB3 and SIB4 for the concerned cell, this cell specific offset is added to the corresponding $Q_{rxlevmin}$ to achieve the required minimum RX level in the concerned cell. |
| $Q_{qualmin}$ | Minimum required quality level in the cell (dB). Additionally, if $Q_{qualminoffsetcell}$ is signalled for the concerned cell, this cell specific offset is added to achieve the required minimum quality level in the concerned cell. |
| $Q_{rxlevminoffset}$ | Offset to the signalled $Q_{rxlevmin}$ taken into account in the $S_{rxlev}$ evaluation as a result of a periodic search for a higher priority PLMN while camped normally in a VPLMN, as specified in TS 23.122 [9]. |
| $Q_{qualminoffset}$ | Offset to the signalled $Q_{qualmin}$ taken into account in the $S_{qual}$ evaluation as a result of a periodic search for a higher priority PLMN while camped normally in a VPLMN, as specified in TS 23.122 [9]. |
| $P_{compensation}$ | For FR1, if the UE supports the additionalPmax in the NR-NS-PmaxList, if present, in SIB1, SIB2 and SIB4: <br> max(PEMAX1 -PPowerClass, 0) - (min(PEMAX2, PPowerClass) - min(PEMAX1, PPowerClass)) (dB); <br> else: <br> max(PEMAX1 -PPowerClass, 0) (dB) <br> For FR2, Pcompensation is set to 0. |
| PEMAX1, PEMAX2 | Maximum TX power level of a UE may be used when transmitting on the uplink in the cell (dBm) defined as PEMAX in TS 38.101 [15]. If the UE supports the SUL frequency for this cell, PEMAX1 and PEMAX2 are obtained from the p-Max for SUL in SIB1 and NR-NS-PmaxList for SUL respectively in SIB1, SIB2 and SIB4 as specified in TS 38.331 [3], else PEMAX1 and PEMAX2 are obtained from the p-Max and NR-NS-PmaxList respectively in SIB1, SIB2 and SIB4 for normal UL as specified in TS 38.331 [3]. |

(continued)

| PPowerClass | Maximum RF output power of the UE (dBm) according to the UE power class as defined in TS 38.101-1 [15]. |
|---|---|

Regarding intra-frequency neighboring cell measurement, if for a serving cell, it satisfies $S_{rxlev} > S_{IntraSearchP}$, where $S_{IntraSearchP}$ is an RSRP signal level threshold used to initiate the intra-frequency measurement, the terminal may choose not to measure the neighboring cell, otherwise, the terminal needs to measure the neighboring cell. The.

Regarding inter-frequency neighboring cell measurement, in a case that a frequency priority of the neighboring cell is less than or equal to a frequency priority of the serving cell, the terminal may choose not to measure the neighboring cell if for the serving cell, it satisfies $S_{rxlev} > S_{nonIntraSearchP}$, where $S_{nonIntraSearchP}$ is an RSRP signal level threshold used to initiate the inter-frequency measurement, otherwise, the terminal needs to measure the neighboring cell.

Criterion R refers to that $Rs = Q_{meas,s} + Q_{hyst} - Q_{offsettemp}$, $Rn = Q_{meas,n} - Q_{offset} - Q_{offsettemp}$, where Rs is an R value of the serving cell, Rn is an R value of the neighboring cell, $Q_{meas,s}$ is an RSRP measurement value of the serving cell, $Q_{meas,n}$ is an RSRP measurement value of the neighboring cell, $Q_{hyst}$ is a cell reselection hysteresis value, and $Q_{offsettemp}$ is a temporary offset value; $Q_{offse}$ is a offset value, as detailed in Table 2 below.

Table 2

| $Q_{meas}$ | RSRP measurement quantity used in cell reselections. |
|---|---|
| $Q_{offset}$ | For intra-frequency: Equals to $Q_{offset\ s,n}$, if $Q_{offset\ s,n}$ is valid, otherwise this equals to zero. For inter-frequency: Equals to $Q_{offset\ s,n}$ plus $Q_{offsetfrequency}$, if $Q_{offset\ s,n}$ is valid, otherwise this equals to $Q_{offsetfrequency}$. |
| $Q_{offsettemp}$ | Offset temporarily applied to a cell as specified in TS 38.331 [3]. |

R value of each cell is calculated based on the above-mentioned criterion R in a case that the terminal measures the neighboring cell(s), and the terminal only performs criterion R ranking to the neighboring cell(s) satisfying the criterion S.

The above-mentioned method for the cell reselection based on criteria S and R is applicable to the TN network. However, with the development of the communication technology, an NTN network is introduced. The following problems may exist in the NTN network.

(1) In a case that a satellite performs a feeder link switch or a terminal service link switch, it will cause the terminal within the cell to perform the cell reselection. During the feeder link switch/service link switch, a network device communicating with the terminal may suddenly stop the service, e.g., gNB may suddenly be unavailable. Therefore, there may be a situation that the terminal does not start neighboring cell measurement but the serving cell is suddenly unavailable, resulting in that the terminal performs the cell reselection too late. In the related art, in response to this problem, information is provided to the terminal for assisting the terminal to perform the cell reselection. For example, time information about that the serving cell may provide the service/stop the service may be provided to the terminal to trigger the terminal to measure the neighboring cell. For another example, time information about providing the service by the neighboring cell is provided to assist the terminal to select a suitable neighboring cell.

(2) Regarding the TN, the terminal may determine that it is located at edge of the cell by an apparent difference between a measured RSRP and an RSRP at center of the cell to perform the measurement on the neighboring cell(s) and perform the cell reselection. However, regarding the NTN, in a case that the satellite moves or the terminal moves so far that the terminal needs to perform the cell reselection, the near-far effect is not as obvious as that of the TN, and thus the terminal may perform the cell reselection too late, or may perform the cell reselection between different cells repeatedly. In order to solve this problem, it is proposed that the terminal performs the cell reselection by using location information of the terminal. For example, the terminal performs the cell reselection in a case that the terminal is geographically located at the edge of the cell.

Therefore, regarding the NTN, cell selection/reselection includes the following solutions: 1) cell reselection based on criteria S and R; 2) cell reselection based on the time information; and 3) cell reselection based on the location information (position/distance information).

Regarding the introduced multiple cell reselection methods for the NTN, the terminal needs to determine which cell reselection method is used to perform the cell reselection.

In view of this, embodiments of the present invention provide a method for cell reselection, and the terminal determines the method for the cell reselection from the multiple methods for the cell reselection according to one or more cell reselection parameters configured by the network device.

In one embodiment, the network device may transmit indication information to indicate one or more cell reselection parameters configured for the terminal. For convenience of description in the embodiments of the present invention, the indication information transmitted by the network device and configured to indicate one or more cell reselection parameters configured for the terminal is referred to as cell reselection parameter indication information. The cell reselection parameter indication information is configured to indicate the one or more cell reselection parameters, and the one or more cell reselection parameters may include at least one of parameter information about the cell reselection performed by applying a criterion S, parameter information about the cell reselection performed by applying criterion R, time parameter information about service provided by a serving cell and/or a neighboring cell, and location parameter information about the serving cell and/or the neighboring cell.

The parameter information about the cell reselection performed by applying the criterion S includes parameters for calculating the cell selection level ($S_{rxlev}$) and the cell selection quality ($S_{qual}$), and a signal quality threshold value of the serving cell. For example, the parameters for calculating the $S_{rxlev}$ may include $Q_{rxlevmeas}$, $Q_{rxlevmin}$, $Q_{rxlevminoffset}$, $P_{compensation}$ and $Q_{offsettemp}$. The parameters for calculating the $S_{qual}$ may include $Q_{qualmeas}$, $Q_{qualmin}$, $Q_{qualminoffset}$ and $Q_{offsettemp}$. In a case that the criterion S is applied for the cell reselection, $S_{rxlev} > 0$ and $S_{qual} > 0$ shall be satisfied.

In a case that the criterion S is applied for the cell reselection, the neighboring cell may be measured according to the signal quality of the serving cell, and the cell reselection may be performed according to the measurement result. Measuring the neighboring cell according to the signal quality of the serving cell includes: triggering measurement on the neighboring cell in a case that a level of the serving cell is greater than a level threshold value of the serving cell. For example, in a case that in the intra-frequency neighboring cell measurement the serving cell satisfies $S_{rxlev} > S_{IntraSearchP}$, where $S_{IntraSearchP}$ is the RSRP signal level threshold used to initiate the intra-frequency measurement, the terminal may choose not to measure the neighboring cell, otherwise, the terminal needs to measure the neighboring cell. The.

Regarding the inter-frequency neighboring cell measurement, in a case that the frequency priority of the neighboring cell is less than or equal to the frequency priority of the serving cell, the terminal may choose not to measure the neighboring cell if the serving cell satisfies $S_{rxlev} > S_{nonIntraSearchP}$, where $S_{nonIntraSearchP}$ is the RSRP signal level threshold used to initiate the inter-frequency measurement, otherwise, the terminal needs to measure the neighboring cell.

In the method for the cell reselection provided by embodiments of the present invention, the parameter information about the cell reselection performed by applying the criterion R includes a cell signal quality value, a cell reselection hysteresis value and a value determined by a temporary offset value.

In the method for the cell reselection provided by embodiments of the present invention, the time parameter information about providing the service by the serving cell and/or the neighboring cell may include the time information about providing the service and/or stopping the service by the serving cell, and the time information about providing the service for the terminal by the neighboring cell.

In the method for the cell reselection provided by embodiments of the present invention, the location parameter information about the serving cell and/or the neighboring cell includes a distance between the serving cell/the neighboring cell and the terminal, and a location of the serving cell/the neighboring cell, and may further include a distance threshold value, and a geographical location range provided by the serving cell.

In the method for the cell reselection provided by embodiments of the present invention, the terminal may receive the cell reselection parameter indication information transmitted by the network device, and perform the cell reselection based on the one or more cell reselection parameters. In a case of performing, by the terminal, the cell reselection based on the one or more cell reselection parameters indicated by the cell reselection parameter indication information, it may include measuring the neighboring cell, and may further include determining the target cell. That is, in embodiments of the present invention, the terminal may determine whether to measure the neighboring cell and/or determine the target cell based on the cell reselection parameter indication information.

It may be understood that in embodiments of the present invention when the terminal performs the cell reselection based on the cell reselection parameter indication information, it may determine to measure the neighboring cell or determine not to measure the neighboring cell. The following embodiments are described based on measuring the neighboring cell. It may be understood by those skilled in the art that the neighboring cell may not be measured.

Furthermore, in the method for the cell reselection provided by embodiments of the present invention, measuring, by the terminal, the neighboring cell may include measuring the signal quality of the neighboring cell, and/or calculating the distance to the neighboring cell, and/or reading system information about the neighboring cell. It is possible to include one or more of acquiring identification (ID) of the neighboring cell, acquiring a system message of the cell, measuring the signal quality of the cell.

FIG. 2 is a flow chart illustrating a method for cell reselection according to an explanatory embodiment. As shown in FIG. 2, the method for the cell reselection is performed by a network device, including the following step.

In S11, cell reselection parameter indication information is transmitted, where the cell reselection parameter indication information is configured to indicate one or more cell reselection parameters.

In the method for the cell reselection provided by embodiments of the present invention, the one or more cell reselection parameters indicated by the cell reselection parameter indication information include at least one of time information about providing a service by a serving cell, location parameter of the serving cell, time information about providing a service by a neighboring cell, location parameter of the neighboring cell, parameter information about the cell reselection performed by applying a criterion S, and parameter information about the cell reselection performed by applying a criterion R.

In the method for the cell reselection provided by embodiments of the present invention, the cell reselection parameter indication information transmitted by the network device may be, for example, system information. The one or more cell reselection parameters for indicating the terminal to perform the cell reselection may be included in the system information.

In the method for the cell reselection provided by embodiments of the present invention, the terminal receives the cell reselection parameter indication information transmitted by the network device, and performs the cell reselection based on the cell reselection parameter indication information, to determine the method for the cell reselection from multiple methods for the cell reselection.

FIG. 3 is a flow chart illustrating a method for cell reselection according to an explanatory embodiment. As shown in FIG. 3, the method for the cell reselection is performed by a terminal, and includes the following steps.

In S21, the cell reselection parameter indication information transmitted by the network device is received, where the cell reselection parameter indication information is configured to indicate one or more cell reselection parameters.

In S22, the cell reselection is performed based on the one or more cell reselection parameters.

In the method for the cell reselection provided by the embodiments of the present invention, the terminal receives the cell reselection parameter indication information transmitted by the network device, where the cell reselection parameter indication information is configured to indicate one or more cell reselection parameters. The terminal performs the cell reselection based on the one or more cell reselection parameters indicated by the cell reselection parameter indication information, to determine the method for the cell reselection from the multiple methods for the cell reselection.

In the method for the cell reselection provided by embodiments of the present invention, the terminal may determine different methods for the cell reselection based on different cell reselection parameters indicated by the cell reselection parameter indication information.

In the method for the cell reselection provided by embodiments of the present invention, the one or more cell reselection parameters indicated by the cell reselection parameter indication information include one or more of time information about providing a service by a serving cell/a neighboring cell, and parameter information about the cell reselection performed by applying a criterion S and parameter information about the cell reselection performed by applying a criterion R.

In one embodiment, the one or more cell reselection parameters indicated by the cell reselection parameter indication information include the time information about providing the service by the serving cell, and the terminal may measure the neighboring cell based on the time information about providing the service by the serving cell. That is, the terminal determines whether to measure the neighboring cell based on the time information if the network device configures a parameter related to the time information of the serving cell.

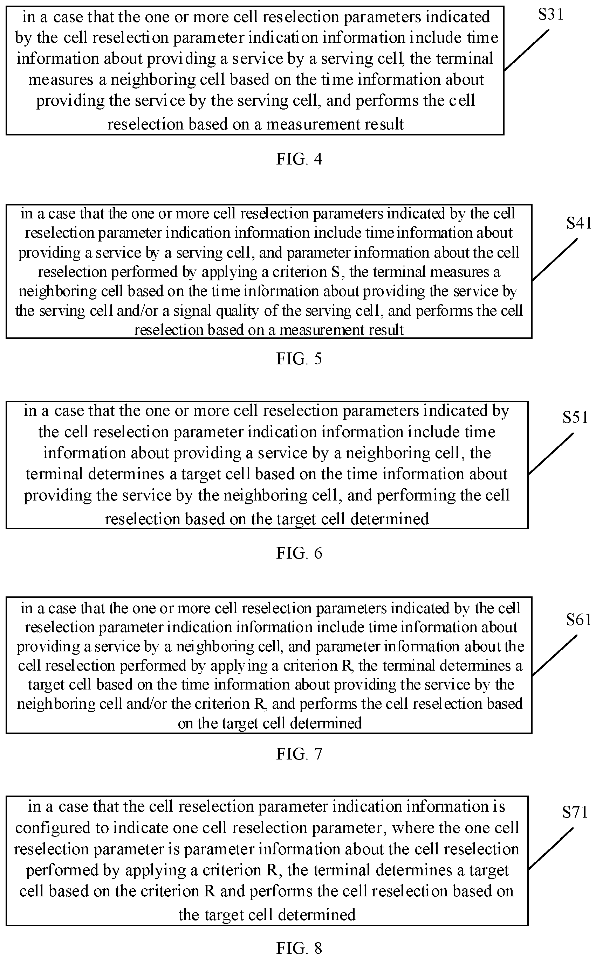

FIG. 4 is a flow chart illustrating a method for cell reselection according to an explanatory embodiment. As shown in FIG. 4, the method for the cell reselection is performed by the terminal, and includes the following step.

In S31, in a case that the one or more cell reselection parameters indicated by the cell reselection parameter indication information include time information about providing the service by the serving cell, the terminal measures the neighboring cell based on the time information about providing the service by the serving cell, and performs the cell reselection based on the measurement result.

In the method for the cell reselection provided by embodiments of the present invention, the time information about providing the service by the serving cell may include the time information about providing the service and/or stopping the service by the serving cell, which may also be understood to be the time information about the neighboring cell which will likely provide the service to the terminal. In the case of determining to measure the neighboring cell based on the time information about providing the service by the serving cell, a condition of the time information about providing the service by the serving cell needs to be satisfied. For example, in a case that the time information of the serving cell is a duration, the terminal determines whether to measure the neighboring cell after the duration detected by a timer expires. In a case that the time information of the serving cell is a moment (i.e., an absolute time, a coordinated universal time (UTC)), the terminal determines to measure the neighboring cell in the case of reaching the moment.

In embodiments of the present invention, the one or more cell reselection parameters indicated by the cell reselection parameter indication information include the time information about providing the service by the serving cell, which may be a case that the cell reselection parameter indication information only indicates the time information about providing the service by the serving cell, or may be a case that the cell reselection parameter indication information indicates the time information about providing the service by the serving cell and other information. For example, the one or more cell reselection parameters indicated by the cell reselection parameter indication information may include the parameter information about the cell reselection performed by applying the criterion S.

In one embodiment, the one or more cell reselection parameters indicated by the cell reselection parameter indication information include the time information about providing the service by the serving cell, and the parameter information about the cell reselection performed by applying the criterion S. The terminal may measure the neighboring cell based on the time information about providing the service by the serving cell and/or the signal quality of the serving cell.

Measuring the neighboring cell based on the signal quality of the serving cell may be understood as triggering measurement on the neighboring cell in a case that the signal quality of the serving cell is greater than a threshold value of the signal quality of the serving cell. That is, when the measurement on the neighboring cell is performed according to the signal quality of the serving cell, the serving cell satisfies $S_{rxlev} > S_{IntraSearchP}$.

FIG. 5 is a flow chart illustrating a method for cell reselection according to an explanatory embodiment. As shown in FIG. 5, the method for the cell reselection is performed by the terminal, and includes the following step.

In S41, in a case that the one or more cell reselection parameters indicated by the cell reselection parameter indication information include the time information about providing the service by the serving cell, and the parameter information about the cell reselection performed by applying the criterion S, the terminal measures the neighboring cell based on the time information about providing the service by the serving cell and/or the signal quality of the serving cell, and performs the cell reselection based on the measurement result.

In the method for the cell reselection provided by embodiments of the present invention, it may be determined whether to measure the neighboring cell based on the threshold value of the signal quality of the serving cell when the terminal measures the neighboring cell based on the signal quality of the serving cell. That is, in the intra-frequency neighboring cell measurement, in a case that the serving cell satisfies $S_{rxlev} > S_{IntraSearchP}$, where $S_{IntraSearchP}$ is the RSRP signal level threshold used to initiate the intra-frequency measurement, the terminal may choose not to measure the neighboring cell, otherwise, the terminal needs to measure the neighboring cell. In the inter-frequency neighboring cell measurement, in a case that a frequency priority of the neighboring cell is less than or equal to a frequency priority of the serving cell, the terminal may choose not to measure the neighboring cell if the serving cell satisfies $S_{rxlev} > S_{nonIntraSearchP}$, where $S_{nonIntraSearchP}$ is the RSRP signal level threshold used to initiate the inter-frequency measurement, otherwise, the terminal needs to measure the neighboring cell.

In the method for the cell reselection provided by embodiments of the present invention, the time information about providing the service by the serving cell may include the time information about the serving cell being able to provide the service and/or stop the service, which may also be understood to be the time information about the neighboring cell which will likely provide the service to the terminal. In the case of determining to measure the neighboring cell based on the time information about providing the service by the serving cell, the condition of the time information about providing the service by the serving cell needs to be satisfied. For example, in a case that the time information of the serving cell is a duration, the terminal determines whether to measure the neighboring cell after the duration detected by a timer expires. In a case that the time information of the serving cell is a moment (i.e., an absolute time, UTC), the terminal determines to measure the neighboring cell in the case of reaching the moment.

In embodiments of the present invention, in a case that the one or more cell reselection parameters indicated by the cell reselection parameter indication information include the time information about providing the service by the serving cell, and the parameter information about the cell reselection performed by applying the criterion S, the neighboring cell may be measured based on any one or more of the time information about providing the service by the serving cell and the signal quality of the serving cell. That is, in an embodiment, the neighboring cell is measured in a case that both the time information about providing the service by the serving cell and the threshold value of the signal quality of the serving cell are satisfied. Alternatively, the neighboring cell is measured in a case that any one of the time information about providing the service by the serving cell and the threshold value of the signal quality of the serving cell is satisfied.

For example, in a case that the one or more cell reselection parameters indicated by the cell reselection parameter indication information include the time information about providing the service by the serving cell, and the parameter information about the cell reselection performed by applying the criterion S, the terminal may measure the neighboring cell based on the time information about providing the service by the serving cell and the signal quality of the serving cell. That is, in a case that the network device configures the time information of the serving cell and a parameter related to the criterion S, the terminal determines whether to measure the neighboring cell according to the time information and the signal quality of the serving cell. For example, in a case that it is determined that the neighboring cell is measured based on the time information and the criterion S, and the time information of the serving cell is a moment (i.e., an absolute time, UTC), the terminal measures the neighboring cell when the terminal arrives at the moment, and the serving cell does not satisfy $S_{rxlev} > S_{IntraSearchP}$.

In another example, in a case that the one or more cell reselection parameters indicated by the cell reselection parameter indication information include the time information about providing the service by the serving cell, and the parameter information about the cell reselection performed by applying the criterion S, the terminal may measure the neighboring cell based on the signal quality of the serving cell. That is, in a case that the network device configures the time information of the serving cell and the parameter related to the criterion S, the terminal determines whether to measure the neighboring cell according to the signal quality of the serving cell.

In yet another example, in a case that the one or more cell reselection parameters indicated by the cell reselection parameter indication information include the time information about providing the service by the serving cell, and the parameter information about the cell reselection performed by applying the criterion S, the terminal may measure the neighboring cell based on the time information about providing the service by the serving cell. That is, in a case that the network device configures the time information of the serving cell and the parameter related to the criterion S, the terminal determines whether to measure the neighboring cell according to the time information.

In the method for the cell reselection provided by embodiments of the present invention, the terminal may determine a target cell when performing the cell reselection based on the cell reselection parameter indication information.

In one embodiment, the one or more cell reselection parameters indicated by the cell reselection parameter indication information include time information about providing a service by a neighboring cell, and the terminal determines the target cell based on the time information about providing the service by the neighboring cell. That is, the terminal determines the target cell according to the time information in a case that the network device configures a parameter related to the time information of the neighboring cell.

FIG. 6 is a flow chart illustrating a method for cell reselection according to an explanatory embodiment. As shown in FIG. 6, the method for the cell reselection is performed by the terminal, and includes the following step.

In S51, in a case that the one or more cell reselection parameters indicated by the cell reselection parameter indication information include the time information about providing the service by the neighboring cell, the terminal determines the target cell based on the time information about providing the service by the neighboring cell.

In the method for the cell reselection provided by embodiments of the present invention, in a case that the terminal determines the target cell based on the time information about providing the service by the neighboring cell, the time information about providing the service by the neighboring cell may be time information indicating when the neighboring cell may provide the service to the terminal. The terminal may select the neighboring cell that may provide the service to the terminal fastest, that is, a cell having a minimum difference between a time when the neighboring cell provides the service to the terminal and a time when the serving cell ends providing the service.

In the method for the cell reselection provided by embodiments of the present invention, the one or more cell reselection parameters indicated by the cell reselection parameter indication information include the time information about providing the service by the neighboring cell, and parameter information about the cell reselection performed by applying a criterion R, and the terminal may determine the target cell based on the time information about providing the service by the neighboring cell and/or the criterion R.

FIG. 7 is a flow chart illustrating a method for cell reselection according to an explanatory embodiment. As shown in FIG. 7, the method for the cell reselection is performed by the terminal, and includes the following step.

In S61, in a case that the one or more cell reselection parameters indicated by the cell reselection parameter indication information include the time information about providing the service by the neighboring cell, and the parameter information about the cell reselection performed by applying the criterion R, the terminal determines the target cell based on the time information about providing the service by the neighboring cell and/or the criterion R, and performs the cell reselection based on the target cell determined.

In one example, in the case that the one or more cell reselection parameters indicated by the cell reselection parameter indication information include the time information about providing the service by the neighboring cell, and the parameter information about the cell reselection performed by applying the criterion R, the terminal determines the target cell based on the time information about providing the service by the neighboring cell and/or the criterion R. That is, the terminal determines the target cell according to the time information and the criterion R in a case that the network device configures the parameter related to the time information of the neighboring cell and a parameter related to the criterion R. For example, in a case that the terminal determines the target cell according to the time information and the criterion R, the terminal selects N best cells based on the criterion R, and selects a cell, from the N best cells as the target cell, having a minimum difference between a time when providing the service to the terminal and a time when the serving cell ends providing the service.

In another example, in the case that the one or more cell reselection parameters indicated by the cell reselection parameter indication information include the time information about providing the service by the neighboring cell, and the parameter information about the cell reselection performed by applying the criterion R, the terminal determines the target cell based on the criterion R. That is, the terminal determines the target cell according to the criterion R in a case that the network device configures the parameter related to the time information of the neighboring cell and the parameter related to the criterion R.

In yet another example, in the case that the one or more cell reselection parameters indicated by the cell reselection parameter indication information include the time information about providing the service by the neighboring cell, and the parameter information about the cell reselection performed by applying the criterion R, the terminal determines the target cell based on the time information about providing the service by the neighboring cell. That is, the terminal determines the target cell according to the time information in a case that the network device configures the parameter related to the time information of the neighboring cell and the parameter related to the criterion R.

In the method for the cell reselection provided by embodiments of the present invention, the terminal may determine the target cell based on the criterion R in a case that the cell reselection parameter indication information is configured to indicate one cell reselection parameter, where the one cell reselection parameter is parameter information about the cell reselection performed by applying the criterion R.

FIG. 8 is a flow chart illustrating a method for cell reselection according to an explanatory embodiment. As shown in FIG. 8, the method for the cell reselection is performed by the terminal, and includes the following step.

In S71, in a case that the cell reselection parameter indication information is configured to indicate one cell reselection parameter, where the one cell reselection parameter is the parameter information about the cell reselection performed by applying the criterion R, the terminal determines the target cell based on the criterion R, and performs the cell reselection based on the target cell determined.

In the method for the cell reselection provided by embodiments of the present invention, the one or more cell reselection parameters indicated by the cell reselection parameter indication information include one or more of a location parameter of the serving cell/the neighboring cell, the parameter information about the cell reselection performed by applying the criterion S and the parameter information about the cell reselection performed by applying the criterion R, where the location parameter of the serving cell/the neighboring cell includes at least one of a distance between the serving cell/the neighboring cell and the terminal, and a geographical location where the serving cell/the neighboring cell is located.

In one embodiment, the one or more cell reselection parameters indicated by the cell reselection parameter indication information include the location parameter of the serving cell, where the location parameter of the serving cell includes at least one of the distance between the serving cell and the terminal, and the geographical location where the serving cell is located. The location parameter of the serving cell may be a threshold value corresponding to the location parameter, for example, a distance threshold value between the serving cell and the terminal. That is, the location parameter of the serving cell may include geographical range information and the distance threshold value between the serving cell and the terminal.

The terminal may measure the neighboring cell based on the location information of the terminal and the location parameter of the serving cell.

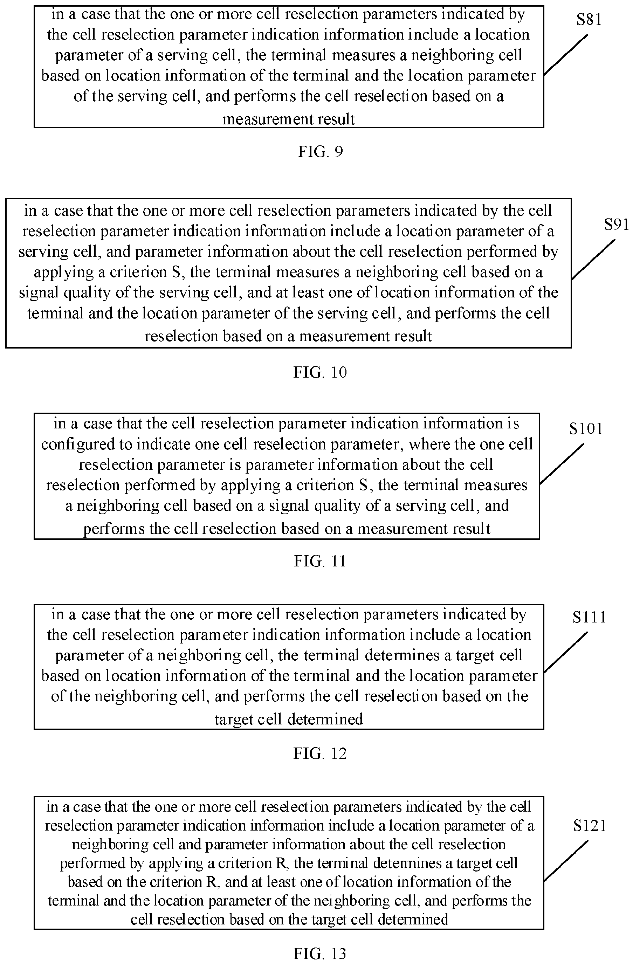

FIG. 9 is a flow chart illustrating a method for cell reselection according to an explanatory embodiment. As shown in FIG. 9, the method for the cell reselection is performed by the terminal, and includes the following step.

In S81, in a case that the one or more cell reselection parameters indicated by the cell reselection parameter indication information include the location parameter of the serving cell, the terminal measures the neighboring cell based on the location information of the terminal and the location parameter of the serving cell, and performs the cell reselection based on the measurement result.

In one example, the terminal determines whether to measure the neighboring cell according to the location information of the terminal and the location parameter of the serving cell in a case that the network device configures parameter(s) related to the location and/or the distance of the serving cell. For example, the terminal determines to measure the neighboring cell based on the location information in a case that the frequency priority of the neighboring cell is lower than that of the serving cell, or a frequency of the neighboring cell is the same as that of the serving cell, and a condition for the terminal to measure the neighboring cell is R> Rx, where Rx is a distance threshold between the terminal and the serving cell, and R is a real-time distance between the terminal and the serving cell. That is, when R>Rx, the terminal measures the neighboring cell.

In one embodiment, the one or more cell reselection parameters indicated by the cell reselection parameter indication information include the location parameter of the serving cell, and the parameter information about the cell reselection performed by applying the criterion S, and the terminal may measure the neighboring cell based on the signal quality of the serving cell, and at least one of the location information of the terminal and the location parameter of the serving cell.

FIG. 10 is a flow chart illustrating a method for cell reselection according to an explanatory embodiment. As shown in FIG. 10, the method for the cell reselection is performed by the terminal, and includes the following step.

In S91, in a case that the one or more cell reselection parameters indicated by the cell reselection parameter indication information include the location parameter of the serving cell, and the parameter information about the cell reselection performed by applying the criterion S, the terminal measures the neighboring cell based on the signal quality of the serving cell and at least one of the location information of the terminal and the location parameter of the serving cell, and performs the cell reselection based on the measurement result.

In one example, the terminal determines whether to measure the neighboring cell based on the location information of the terminal, the location parameter of the serving cell and the signal quality of the serving cell in a case that the network device configures the parameter(s) related to the location and/or the distance of the serving cell and parameters related to the cell reselection by applying the criterion S. For example, a condition that the terminal measures the neighboring cell is that R > Rx and the serving cell does not satisfy $S_{rxlev} > S_{IntraSearchP}$. That is, in a case where R > Rx and $S_{rxlev} \leq S_{IntraSearchP}$, the terminal measures the neighboring cell. Alternatively, in the method for the cell reselection provided by embodiments of the present invention, the terminal may also measure the neighboring cell in a case where R > Rx or $S_{rxlev} \leq S_{IntraSearchP}$.

In the method for the cell reselection provided by embodiments of the present invention, the terminal may measure the neighboring cell based on the signal quality of the serving cell in a case that the one or more cell reselection parameters indicated by the cell reselection parameter indication information include the location parameter of the serving cell, and the parameter information about the cell reselection performed by applying the criterion S. For example, the terminal determines whether to measure the neighboring cell based on the signal quality of the serving cell in a case that the network device configures the parameter(s) related to the location and/or the distance of the serving cell and parameters related to the cell reselection by applying the criterion S, but the location information such as the parameter(s) related to the location and/or the distance of the serving cell is not available.

In one embodiment, the terminal determines whether to measure the neighboring cell according to the signal quality of the serving cell in a case that the network device only configures the parameters related to the cell reselection by applying the criterion S of the serving cell. That is, the terminal measures the neighboring cell based on the signal quality of the serving cell in a case that the cell reselection parameter indication information is configured to indicate one cell reselection parameter, where the one cell reselection parameter is the parameter information about the cell reselection performed by applying the criterion S.

FIG. 11 is a flow chart illustrating a method for cell reselection according to an explanatory embodiment. As shown in FIG. 11, the method for the cell reselection is performed by the terminal, and includes the following step.

In S101, in a case that the cell reselection parameter indication information is configured to indicate one cell reselection parameter, and the one cell reselection parameter is the parameter information about the cell reselection performed by applying the criterion S, the terminal measures the neighboring cell based on the signal quality of the serving cell, and performs the cell reselection based on the measurement result.

In one embodiment of the method for the cell reselection provided by embodiments of the present invention, the terminal may determine the target cell based on the location information of the terminal and the location parameter of the neighboring cell in a case that the one or more cell reselection parameters indicated by the cell reselection parameter indication information include the location parameter of the neighboring cell, and the location parameter of the neighboring cell includes the at least one of the distance between the neighboring cell and the terminal, and the geographical location where the neighboring cell is located.

FIG. 12 is a flow chart illustrating a method for cell reselection according to an explanatory embodiment. As shown in FIG. 12, the method for the cell reselection is performed by the terminal, and includes the following step.

In S111, in a case that the one or more cell reselection parameters indicated by the cell reselection parameter indication information include the location parameter of the neighboring cell, the terminal may determine the target cell based on the location information of the terminal and the location parameter of the neighboring cell, and perform the cell reselection based on the target cell determined.

In one example, in a case that the network device configures location-related information of the neighboring cell, the terminal determines the target cell according to the location-related information of the neighboring cell and the location of the terminal. For example, the terminal calculates distances between the terminal and multiple target cells, and selects a cell at the minimum distance as the target cell.

In one embodiment, in the method for the cell reselection provided by embodiments of the present invention, the one or more cell reselection parameters indicated by the cell reselection parameter indication information transmitted by the network device include the location parameter of the neighboring cell and the parameter information about the cell reselection performed by applying the criterion R. The terminal may determine the target cell based on the criterion R and at least one of the location information of the terminal and the location parameter of the neighboring cell.

FIG. 13 is a flow chart illustrating a method for cell reselection according to an explanatory embodiment. As shown in FIG. 13, the method for the cell reselection is performed by the terminal, and includes the following step.

In S121, in a case that the one or more cell reselection parameters indicated by the cell reselection parameter indication information include the location parameter of the neighboring cell and the parameter information about the cell reselection performed by applying the criterion R, the terminal determines the target cell based on the criterion R, and at least one of the location information of the terminal and the location parameter of the neighboring cell, and performs the cell reselection based on the target cell determined.

In one example, the terminal determines the target cell according to the location information of the neighboring cell, the location of the terminal and the criterion R in a case that the network device configures the location-related information of the neighboring cell and the parameters related to the criterion R. For example, in the case of determining the target cell based on the location information of the neighboring cell and the criterion R, the terminal selects N cells based on the criterion R, and selects a cell, from the N cells, with the minimum distance between the cell and the terminal, as the target cell.

In one embodiment, the one or more cell reselection parameters indicated by the cell reselection parameter indication information include the location parameter of the neighboring cell and the parameter information about the cell reselection performed by applying the criterion R, and the terminal may determine the target cell based on the criterion R in the case of performing the cell reselection based on the one or more cell reselection parameters.

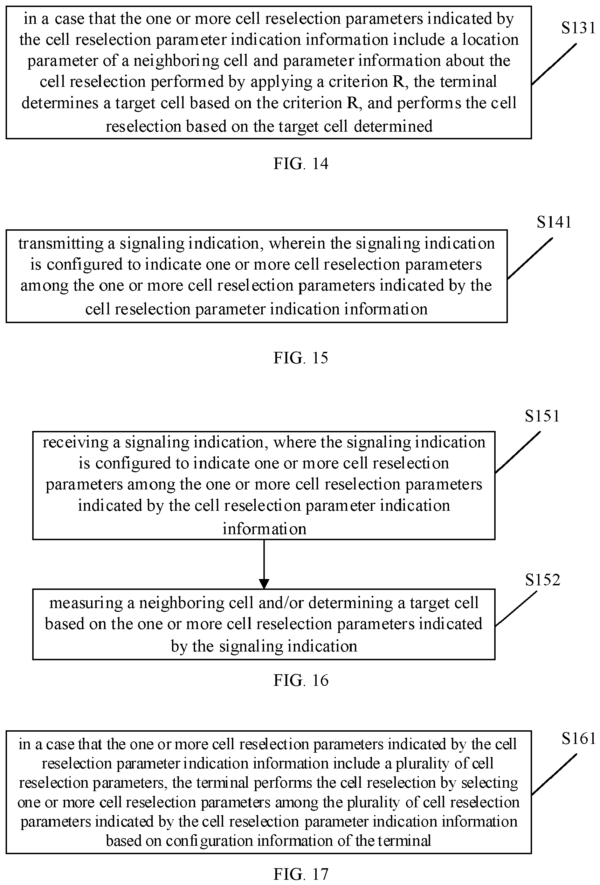

FIG. 14 is a flow chart illustrating a method for cell reselection according to an explanatory embodiment. As shown in FIG. 14, the method for the cell reselection is performed by the terminal, and includes the following step.

In S131, in a case that the one or more cell reselection parameters indicated by the cell reselection parameter indication information include the location parameter of the neighboring cell and the parameter information about the cell reselection performed by applying the criterion R, the terminal determines the target cell based on the criterion R, and performs the cell reselection based on the target cell determined.

In one example, the terminal determines the target cell according to the criterion R in a case that the network device configures the location-related information of the neighboring cell and the parameters related to the criterion R. For example, the terminal determines the target cell based on the signal quality (the criterion R) of the serving cell in a case that the network device configures the location-related information of the neighboring cell and the parameters related to the criterion R, but the location information of the terminal is unavailable.

In the method for the cell reselection provided by embodiments of the present invention, the network device may clearly indicate the one or more cell reselection parameters used by the terminal for the cell reselection through signaling, that is, the network device may transmit a signaling indication to the terminal, and the signaling indication is configured to indicate the one or more cell reselection parameters indicated by the cell reselection parameter indication information, where the one or more cell reselection parameters are used as the cell reselection parameter used by the terminal for the cell reselection.

FIG. 15 is a flow chart illustrating a method for cell reselection according to an explanatory embodiment. As shown in FIG. 15, the method for the cell reselection is performed by the network device, and includes the following step.

In S141, the indication information is transmitted, where the signaling indication is configured to indicate one or more cell reselection parameters among the one or more cell reselection parameters indicated by the cell reselection parameter indication information.

FIG. 16 is a flow chart illustrating a method for cell reselection according to an explanatory embodiment. As shown in FIG. 16, the method for the cell reselection is performed by the terminal, and includes the following steps.

In S 151, the signaling indication is received, where the signaling indication is configured to indicate one or more cell reselection parameters among the one or more cell reselection parameters indicated by the cell reselection parameter indication information.

In S152, the neighboring cell is measured and/or the target cell is determined based on the one or more cell reselection parameters indicated by the signaling indication.

In the method for the cell reselection provided by embodiments of the present invention, in a case that the network device configures multiple methods for the cell reselection for the terminal, the network device may indicate the terminal through signaling which method for the cell reselection to use for measuring the neighboring cell and/or which method for the cell reselection to use for determining the target cell.

In the method for the cell reselection provided by embodiments of the present invention, in the case that the network device configures multiple methods for the cell reselection for the terminal, the terminal may select the method for the cell reselection based on terminal's own implementation. For example, the terminal may perform the cell reselection by selecting one or more cell reselection parameters among a plurality of cell reselection parameters indicated by the cell reselection parameter indication information based on configuration information of the terminal.

FIG. 17 is a flow chart illustrating a method for cell reselection according to an explanatory embodiment. As shown in FIG. 17, the method for the cell reselection is performed by the terminal, and includes the following step.

In S161, in a case that the one or more cell reselection parameters indicated by the cell reselection parameter indication information include a plurality of cell reselection parameters, the terminal performs the cell reselection by selecting one or more cell reselection parameters among the plurality of cell reselection parameters indicated by the cell reselection parameter indication information based on configuration information of the terminal.

In the method for the cell reselection provided by embodiments of the present invention, the terminal determines which method to use to determine whether to measure the neighboring cell and/or which method to use to determine the target cell based on terminal implementation. That is, in a case that parameters configured by the network support the terminal to use the multiple methods for the cell reselection, the terminal determines which method to use for the cell reselection based on the terminal implementation.

In the method for the cell reselection provided by embodiments of the present invention, the terminal may still perform the cell reselection based on the criterion S and the criterion R in a case that the cell reselection parameter indication information transmitted by the network device indicates the cell reselection parameters used by the multiple methods for the cell reselection, for example, the cell reselection parameters indicated by the cell reselection parameter indication information include the time information about providing the service by the serving cell, the location parameter of the serving cell, the time information about providing the service by the neighboring cell, the location parameter of the neighboring cell, the parameter information about the cell reselection performed by applying the criterion S, and the parameter information about the cell reselection performed by applying the criterion R.

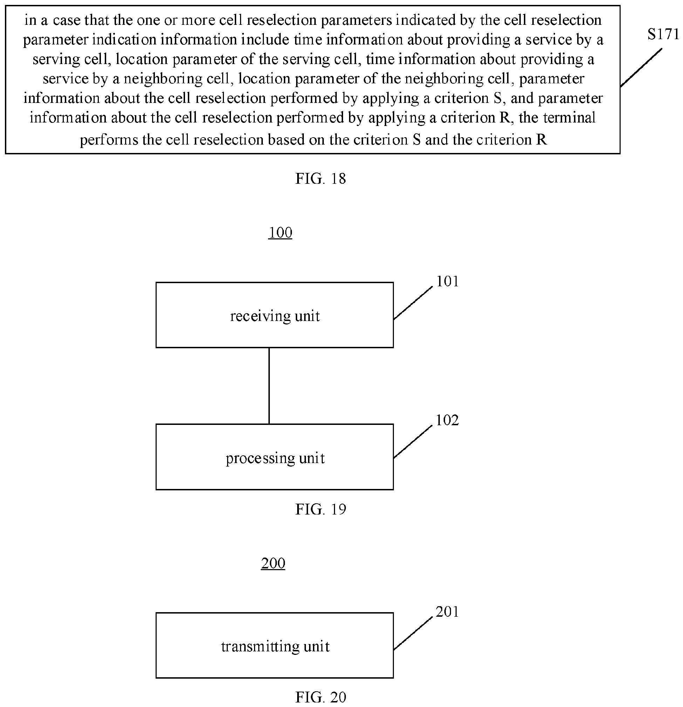

FIG. 18 is a flow chart illustrating a method for cell reselection according to an explanatory embodiment. As shown in FIG. 18, the method for the cell reselection is performed by the terminal, and includes the following step.

In S171, the terminal performs the cell reselection based on the criterion S and the criterion R in a case that the one or more cell reselection parameters indicated by the cell reselection parameter indication information include the time information about providing the service by the serving cell, the location parameter of the serving cell, the time information about providing the service by the neighboring cell, the location parameter of the neighboring cell, the parameter information about the cell reselection performed by applying the criterion S, and the parameter information about the cell reselection performed by applying the criterion R.

In the method for the cell reselection provided by embodiments of the present invention, the terminal may determine the one or more cell reselection parameters for the cell reselection (measuring the neighboring cell and/or determining the target cell) in the case that the network device configures the one or more cell reselection parameters used by the method for the cell reselection, to realize the cell reselection in the multiple methods for the cell reselection.

It may be understood that the above examples are only illustrative. The terminal may perform processes of measuring the neighboring cell and/or determining the target cell in different combinations for the cell reselection in the case that the terminal has the multiple methods for the cell reselection.

For example, the terminal may determine to measure the neighboring cell based on the time information and the criterion S in a case that the cell reselection parameters include the parameters related to the time information of the serving cell and the parameters related to the criterion S, and the parameters related to the time information of the neighboring cell. The terminal measures the neighboring cell in a case that the time information of the serving cell is a moment (i.e., an absolute time, UTC), the terminal arrives at the moment, and the serving cell does not satisfy $S_{rxlev} > S_{IntraSearchP}$. The terminal determines the target cell based on the time information. The terminal selects the neighboring cell that may provide the service to the terminal fastest, that is, a cell having a minimum difference between a time when the neighboring cell provides the service to the terminal and a time when the serving cell ends providing the service in a case that the time information is information of a time when the neighboring cell may provide the service to the terminal.

It may be understood that the method for the cell reselection provided in embodiments of the present invention is also applicable to a process of an interaction between the terminal and the network device to implement the cell reselection. In the process of the interaction between the terminal and the network device to implement the cell reselection, the terminal and the network device each have the function(s) involved in the above embodiments. Therefore, the process of the interaction between the terminal and the network device to implement the cell reselection may be referred to the relevant description of the above embodiments, and will not be described in detail here.

It should be noted that, as may be understood by those skilled in the art, the various embodiments/examples related to the present invention may be used in combination, or may be used independently. No matter they are used in combination or used independently, principles are similar. In the present invention, some embodiments are described in a form of a combination of the embodiments. Those skilled in the art will understand that such a combination do not limit the embodiments of the present invention.

Based on the same concept, embodiments of the present invention further provide an apparatus for cell reselection.

It may be understood that, the apparatus for the cell reselection provided by the embodiments of the present invention includes corresponding hardware structures and/or software modules for performing various functions in order to implement the above-mentioned functions. The embodiments of the present invention may be implemented in a form of hardware or a combination of hardware and computer software in combination with units and algorithm steps of each example disclosed in the embodiments of the present invention. Whether a function is performed by hardware or by hardware driven by the computer software depends on specific applications and design constraints of the technical solution. Those skilled in the art may use different methods to implement the described functions for each specific application, but such an implementation should not be regarded as extending beyond the scope of the technical solutions of the embodiments of the present invention.

FIG. 19 is a block diagram illustrating an apparatus for cell reselection according to an explanatory embodiment. As shown in FIG. 19, the apparatus 100 for the cell reselection includes a receiving unit 101 and a processing unit 102.

The receiving unit 101 is configured to receive the cell reselection parameter indication information transmitted by the network device, where the cell reselection parameter indication information is configured to indicate the one or more cell reselection parameters. The processing unit 102 is configured to perform the cell reselection based on the one or more cell reselection parameters.

In an embodiment, the one or more cell reselection parameters include the time information about providing the service by the serving cell. The processing unit 102 is configured to measure the neighboring cell based on the time information about providing the service by the serving cell.

In an embodiment, the one or more cell reselection parameters include time information about providing a service by a serving cell, and parameter information about the cell reselection performed by applying a criterion S, where the parameter information about the cell reselection performed by applying the criterion S includes parameters for calculating a cell selection level and a cell selection quality, and a threshold value of a signal quality of the serving cell. The processing unit 102 is configured to measure a neighboring cell based on the time information about providing the service by the serving cell and/or the signal quality of the serving cell, where measuring the neighboring cell based on the signal quality of the serving cell includes: triggering measurement on the neighboring cell in a case that the signal quality of the serving cell is greater than the threshold value of the signal quality of the serving cell.

In an embodiment, the one or more cell reselection parameters include time information about providing a service by a neighboring cell. The processing unit 102 is configured to determine a target cell based on the time information about providing the service by the neighboring cell, and perform the cell reselection based on the target cell determined.

In an embodiment, the one or more cell reselection parameters include time information about providing a service by a neighboring cell, and parameter information about the cell reselection performed by applying a criterion R. The processing unit 102 is configured to determine a target cell based on the time information about providing the service by the neighboring cell and/or the criterion R, and perform the cell reselection based on the target cell determined.

In an embodiment, the cell reselection parameter indication information is configured to indicate one cell reselection parameter, where the one cell reselection parameter is parameter information about the cell reselection performed by applying a criterion R, and the parameter information about the cell reselection performed by applying the criterion R includes a cell signal quality value, a cell reselection hysteresis value, and a value determined by a temporary offset value. The processing unit 102 is configured to determine a target cell based on the criterion R, and perform the cell reselection based on the target cell determined.

In an embodiment, the one or more cell reselection parameters indicated by the cell reselection parameter indication information include a location parameter of a serving cell, where the location parameter of the serving cell includes at least one of a distance between the serving cell and the terminal, and a geographical location where the serving cell is located. The processing unit 102 is configured to measure a neighboring cell based on the location information of the terminal and the location parameter of the serving cell.

In an embodiment, the one or more cell reselection parameters indicated by the cell reselection parameter indication information include a location parameter of a serving cell, and parameter information about the cell reselection performed by applying a criterion S, where the location parameter of the serving cell includes at least one of a distance between the serving cell and the terminal, and a geographical location where the serving cell is located. The processing unit 102 is configured to measure a neighboring cell based on the signal quality of the serving cell, and at least one of the location information of the terminal and the location parameter of the serving cell.

In an embodiment, the one or more cell reselection parameters indicated by the cell reselection parameter indication information include a location parameter of a serving cell, and parameter information about the cell reselection performed by applying a criterion S, where the location parameter of the serving cell includes at least one of a distance between the serving cell and the terminal, and a geographical location where the serving cell is located. The processing unit 102 is configured to measure a neighboring cell based on a signal quality of the serving cell.

In an embodiment, the cell reselection parameter indication information is configured to indicate one cell reselection parameter, where the one cell reselection parameter is parameter information about the cell reselection performed by applying a criterion S. The processing unit 102 is configured to measure a neighboring cell based on a signal quality of a serving cell.

In an embodiment, the one or more cell reselection parameters indicated by the cell reselection parameter indication information include a location parameter of a neighboring cell, where the location parameter of the neighboring cell includes at least one of a distance between the neighboring cell and the terminal, and a geographical location where the neighboring cell is located. The processing unit 102 is configured to determine a target cell based on location information of the terminal and the location parameter of the neighboring cell, and perform the cell reselection based on the target cell determined.

In an embodiment, the one or more cell reselection parameters indicated by the cell reselection parameter indication information include a location parameter of the neighboring cell, and parameter information about the cell reselection performed by applying a criterion R. The processing unit 102 is configured to determine a target cell based on the criterion R, and at least one of location information of the terminal and the location parameter of the neighboring cell, and perform the cell reselection based on the target cell determined.

In an embodiment, the one or more cell reselection parameters indicated by the cell reselection parameter indication information include a location parameter of a neighboring cell, and parameter information about the cell reselection performed by applying a criterion R. The processing unit 102 is configured to determine a target cell based on the criterion R, and perform the cell reselection based on the target cell determined.

In an embodiment, the present method further includes: receiving a signaling indication, where the signaling indication is configured to indicate one or more cell reselection parameters among the one or more cell reselection parameters indicated by the cell reselection parameter indication information. The processing unit 102 is configured to measure a neighboring cell and/or determine a target cell based on the one or more cell reselection parameters indicated by the signaling indication.

In an embodiment, the one or more cell reselection parameters indicated by the cell reselection parameter indication information include a plurality of cell reselection parameters. The processing unit 102 is configured to perform the cell reselection by selecting one or more cell reselection parameters among the plurality of cell reselection parameters indicated by the cell reselection parameter indication information based on configuration information of the terminal.

In an embodiment, the one or more cell reselection parameters indicated by the cell reselection parameter indication information include time information about providing a service by a serving cell, a location parameter of the serving cell, time information about providing a service by a neighboring cell, location parameter of the neighboring cell, parameter information about the cell reselection performed by applying a criterion S, and parameter information about the cell reselection performed by applying a criterion R. The processing unit 102 is configured to perform the cell reselection based on the criterion S and the criterion R.

FIG. 20 is a block diagram illustrating an apparatus for cell reselection according to an explanatory embodiment. As shown in FIG. 20, the apparatus 200 for the cell reselection includes a transmitting unit 201.

The transmitting unit 201 is configured to transmit cell reselection parameter indication information, where the cell reselection parameter indication information is configured to indicate one or more cell reselection parameters.

In an embodiment, the one or more cell reselection parameters include at least one of: time information about providing a service by a serving cell, a location parameter of the serving cell, time information about providing a service by a neighboring cell, a location parameter of the neighboring cell, parameter information about the cell reselection performed by applying a criterion S, and parameter information about the cell reselection performed by applying a criterion R.

In an embodiment, the transmitting unit 201 is further configured to transmit a signaling indication, where the signaling indication is configured to indicate one or more cell reselection parameters among the one or more cell reselection parameters indicated by the cell reselection parameter indication information.

With respect to the apparatuses in the above embodiments, specific manners for performing operations for individual modules therein have been described in detail in the embodiments regarding the method, which will not be elaborated herein.

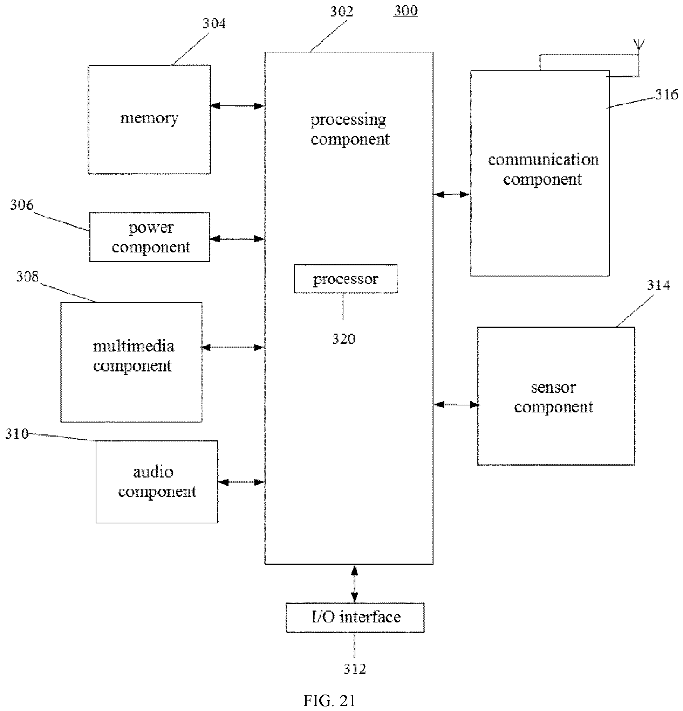

FIG. 21 is a block diagram illustrating a device for cell reselection according to an explanatory embodiment. For example, the device 300 can be a mobile phone, a computer, a digital broadcast terminal, a messaging device, a game console, a tablet device, a medical device, a fitness device, a personal digital assistant, or the like.

Referring to FIG. 21, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone ("MIC") configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, a button and the like. The button may include, but not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as WiFi, 2G, or 3G, or a combination thereof. In one embodiment, the communication component 316 receives a broadcast signal or broadcast associated information from an external broadcast management system via a broadcast channel. In one embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the above described methods.

In embodiments, there is further provided a non-transitory computer-readable storage medium (such as the memory 304) including instructions that, when executed by the processor 320 of the device 300, to perform any of the above-described methods. For example, the non-transitory computer-readable storage medium may be a ROM, a RAM, a CD-ROM, a magnetic tape, a floppy disc, an optical data storage device, and the like.

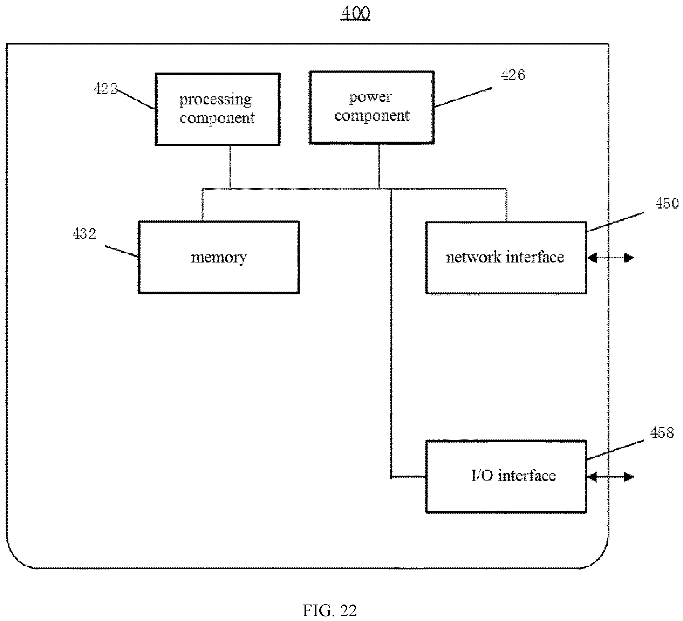

FIG. 22 is a block diagram illustrating a device for cell reselection according to an explanatory embodiment. For example, the device 400 may be a network device. Referring to FIG. 22, the device 400 includes a processing component 422 and a memory resource represented by a memory 432. The processing component 422 may further include one or more processors. The memory resource is configured to store instructions executable by the processing component 422, such as an application program. The application program stored in the memory 432 may include one or more modules corresponding to a set of instructions. In addition, the processing component 422 is configured to execute the instructions to perform the above method.

The device 400 further includes a power component 426 configured to operate a power management of the device 400, a wired or wireless network interface 450 configured to connect the device 400 to the network, and an input/output (I/O) interface 458. The device 400 may operate an operating system stored in the memory 432, such as Windows Server TM, Mac OS XTM, Unix TM, Linux TM, Free BSDTM, or the like.

In illustrative embodiments, there is also provided a non-transitory computer-readable storage medium including instructions, such as included in the memory 432, executable by the processor 422 in the device 400, for performing the above-described methods. For example, the non-transitory computer-readable storage medium may be a ROM, a RAM, a CD-ROM, a magnetic tape, a floppy disc, an optical data storage device, and the like.

It is further understood that "a plurality" in this disclosure refers to two or more, and other quantifiers are similar thereto. Term "and/or", which describes an associated relationship of associated objects, refers to three relationships. For example, A and/or B means that A exists alone, A and B exist at the same time, and B exists alone. A character "/" generally indicates that contextual objects are in an "or" relationship. Terms "alan" and "the" in the singular form are intended to include plural forms, unless clearly indicated in the context otherwise.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, without departing from the scope of embodiments of the present invention, first information may also be referred to as second information, and similarly, the second information may also be referred to as the first information.

It is further understood that although operations are described in a specific order in the accompanying drawings in the embodiments of the present invention, it should not be understood that these operations are required to be performed in the specific order shown or in a serial order, or that all of the operations shown are required to be performed to obtain desired results. In some circumstances, multitasking and parallel processing may be advantageous.

Other embodiments of the present invention will be apparent to those skilled in the art from consideration of the specification and practice of the present invention disclosed here. The present invention is intended to cover any variations, uses, or adaptations of the present invention following the general principles thereof and including common knowledge or conventional technical means known in the art but not disclosed in the present invention. The specification and examples should be considered as explanatory only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. The scope of the present invention is only limited by the appended claims.

**Claims**

**1.** A method for cell reselection, performed by a terminal, comprising:

receiving cell reselection parameter indication information transmitted by a network device, wherein the cell reselection parameter indication information is configured to indicate one or more cell reselection parameters; and
performing the cell reselection based on the one or more cell reselection parameters.

**2.** The method according to claim 1, wherein the one or more cell reselection parameters comprise time information about providing a service by a serving cell;
performing the cell reselection based on the one or more cell reselection parameters comprises:
measuring a neighboring cell based on the time information about providing the service by the serving cell, and performing the cell reselection based on a measurement result.

**3.** The method according to claim 1, wherein the one or more cell reselection parameters comprise time information about providing a service by a serving cell, and parameter information about the cell reselection performed by applying a criterion S, wherein the parameter information about the cell reselection performed by applying the criterion S comprises a threshold value of a signal quality of the serving cell, and parameters for calculating a cell selection level and a cell selection quality;
performing the cell reselection based on the one or more cell reselection parameters comprises:

measuring a neighboring cell based on the time information about providing the service by the serving cell and/or the signal quality of the serving cell, and performing the cell reselection based on a measurement result; wherein measuring the neighboring cell based on the signal quality of the serving cell comprises: triggering measurement on the neighboring cell in a case that the signal quality of the serving cell is greater than the threshold value of the signal quality of the serving cell.

**4.** The method according to claim 1, wherein the one or more cell reselection parameters comprise time information about providing a service by a neighboring cell;
performing the cell reselection based on the one or more cell reselection parameters comprises:
determining a target cell based on the time information about providing the service by the neighboring cell, and performing the cell reselection based on the target cell determined.

**5.** The method according to claim 1, wherein the one or more cell reselection parameters comprise time information about providing a service by a neighboring cell, and parameter information about the cell reselection performed by applying a criterion R, wherein the parameter information about the cell reselection performed by applying the criterion R comprises a cell signal quality value, a cell reselection hysteresis value and a value determined by a temporary offset value;
performing the cell reselection based on the one or more cell reselection parameters comprises:

determining a target cell based on the time information about providing the service by the neighboring cell and/or the criterion R, and performing the cell reselection based on the target cell determined.

6. The method according to claim 1, wherein the cell reselection parameter indication information is configured to indicate one cell reselection parameter, wherein the one cell reselection parameter is parameter information about the cell reselection performed by applying a criterion R;
performing the cell reselection based on the one or more cell reselection parameters comprises:
determining a target cell based on the criterion R, and performing the cell reselection based on the target cell determined.

7. The method according to claim 1, wherein the one or more cell reselection parameters indicated by the cell reselection parameter indication information comprise a location parameter of a serving cell, wherein the location parameter of the serving cell comprises at least one of a distance between the serving cell and the terminal, and a geographical location where the serving cell is located;
performing the cell reselection based on the one or more cell reselection parameters comprises:
measuring a neighboring cell based on location information of the terminal and the location parameter of the serving cell, and performing the cell reselection based on a measurement result.

8. The method according to claim 1, wherein the one or more cell reselection parameters indicated by the cell reselection parameter indication information comprise a location parameter of a serving cell, and parameter information about the cell reselection performed by applying a criterion S, wherein the location parameter of the serving cell comprises at least one of a distance between the serving cell and the terminal, and a geographical location where the serving cell is located;
performing the cell reselection based on the one or more cell reselection parameters comprises:
measuring a neighboring cell based on a signal quality of the serving cell, and at least one of location information of the terminal and the location parameter of the serving cell, and performing the cell reselection based on a measurement result.

9. The method according to claim 1, wherein the one or more cell reselection parameters indicated by the cell reselection parameter indication information comprise a location parameter of a serving cell, and parameter information about the cell reselection performed by applying a criterion S, wherein the location parameter of the serving cell comprises at least one of a distance between the serving cell and the terminal, and a geographical location where the serving cell is located;
performing the cell reselection based on the one or more cell reselection parameters comprises:
measuring a neighboring cell based on a signal quality of the serving cell, and performing the cell reselection based on a measurement result.

10. The method according to claim 1, wherein the cell reselection parameter indication information is configured to indicate one cell reselection parameter, wherein the one cell reselection parameter is parameter information about the cell reselection performed by applying a criterion S;
performing the cell reselection based on the one or more cell reselection parameters comprises:
measuring a neighboring cell based on a signal quality of a serving cell, and performing the cell reselection based on a measurement result.

11. The method according to claim 1, wherein the one or more cell reselection parameters indicated by the cell reselection parameter indication information comprise a location parameter of a neighboring cell, wherein the location parameter of the neighboring cell comprises at least one of a distance between the neighboring cell and the terminal, and a geographical location where the neighboring cell is located;
performing the cell reselection based on the one or more cell reselection parameters comprises:
determining a target cell based on location information of the terminal and the location parameter of the neighboring cell, and performing the cell reselection based on the target cell determined.

12. The method according to claim 1, wherein the one or more cell reselection parameters indicated by the cell reselection parameter indication information comprise a location parameter of a neighboring cell, and parameter information about the cell reselection performed by applying a criterion R;
performing the cell reselection based on the one or more cell reselection parameters comprises:
determining a target cell based on the criterion R, and at least one of location information of the terminal and the location parameter of the neighboring cell, and performing the cell reselection based on the target cell determined.

13. The method according to claim 1, wherein the one or more cell reselection parameters indicated by the cell reselection parameter indication information comprise a location parameter of a neighboring cell, and parameter information about the cell reselection performed by applying a criterion R;
performing the cell reselection based on the one or more cell reselection parameters comprises:
determining a target cell based on the criterion R, and performing the cell reselection based on the target cell determined.

14. The method according to claim 1, further comprising:

receiving a signaling indication, wherein the signaling indication is configured to indicate one or more cell reselection parameters among the one or more cell reselection parameters indicated by the cell reselection parameter indication information;
wherein performing the cell reselection based on the one or more cell reselection parameters comprises:
measuring a neighboring cell and/or determining a target cell based on the one or more cell reselection parameters indicated by the signaling indication, and performing the cell reselection based on the target cell determined.

15. The method according to claim 1, wherein the one or more cell reselection parameters indicated by the cell reselection parameter indication information comprise a plurality of cell reselection parameters;
performing the cell reselection based on the one or more cell reselection parameters comprises:
performing the cell reselection by selecting one or more cell reselection parameters among the plurality of cell reselection parameters indicated by the cell reselection parameter indication information based on configuration information of the terminal.

16. The method according to claim 1, wherein the one or more cell reselection parameters indicated by the cell reselection parameter indication information comprise time information about providing a service by a serving cell, a location parameter of the serving cell, time information about providing a service by a neighboring cell, a location parameter of the neighboring cell, parameter information about the cell reselection performed by applying a criterion S, and parameter information about the cell reselection performed by applying a criterion R; and
performing the cell reselection based on the one or more cell reselection parameters comprises:
performing the cell reselection based on the criterion S and the criterion R.

17. A method for cell reselection, performed by a network device, comprising:
transmitting cell reselection parameter indication information, wherein the cell reselection parameter indication information is configured to indicate one or more cell reselection parameters.

18. The method according to claim 17, wherein the one or more cell reselection parameters comprise at least one of:

time information about providing a service by a serving cell,
a location parameter of the serving cell,
time information about providing a service by a neighboring cell,
a location parameter of the neighboring cell,
parameter information about the cell reselection performed by applying a criterion S, wherein the parameter information about the cell reselection performed by applying the criterion S comprises a threshold value of a signal quality of the serving cell, and parameters for calculating a cell selection level and a cell selection quality, and
parameter information about the cell reselection performed by applying a criterion R, wherein the parameter information about the cell reselection performed by applying the criterion R comprises a cell signal quality value, a cell reselection hysteresis value, and a value determined by a temporary offset value.

19. The method according to claim 17, further comprising:
transmitting a signaling indication, wherein the signaling indication is configured to indicate one or more cell reselection parameters among the one or more cell reselection parameters indicated by the cell reselection parameter indication information.

20. An apparatus for cell reselection, comprising:

a receiving unit configured to receive cell reselection parameter indication information transmitted by a network device, wherein the cell reselection parameter indication information is configured to indicate one or more cell reselection parameters; and

a processing unit configured to perform the cell reselection based on the one or more cell reselection parameters.

21. An apparatus for cell reselection, comprising:

a transmitting unit configured to transmit cell reselection parameter indication information, wherein the cell reselection parameter indication information is configured to indicate one or more cell reselection parameters.

22. A device for cell reselection, comprising:

a processor; and

a memory for storing processor-executable instructions;

wherein the processor is configured to perform the method according to any one of claims 1 to 16, or perform the method according to any one of claims 17 to 19.

23. A computer-readable storage medium having stored therein instructions that, when executed, cause the method according to any one of claims 1 to 16, or the method according to any one of claims 17 to 19 to be performed.

network device

terminal

terminal

FIG. 1

transmitting cell reselection parameter indication information, where the cell reselection parameter indication information is configured to indicate one or more cell reselection parameters

S11

FIG. 2

receiving cell reselection parameter indication information transmitted by a network device, where the cell reselection parameter indication information is configured to indicate one or more cell reselection parameters

S21

performing the cell reselection based on the one or more cell reselection parameters

S22

FIG. 3

in a case that the one or more cell reselection parameters indicated by the cell reselection parameter indication information include time information about providing a service by a serving cell, the terminal measures a neighboring cell based on the time information about providing the service by the serving cell, and performs the cell reselection based on a measurement result

S31

FIG. 4

in a case that the one or more cell reselection parameters indicated by the cell reselection parameter indication information include time information about providing a service by a serving cell, and parameter information about the cell reselection performed by applying a criterion S, the terminal measures a neighboring cell based on the time information about providing the service by the serving cell and/or a signal quality of the serving cell, and performs the cell reselection based on a measurement result

S41

FIG. 5

in a case that the one or more cell reselection parameters indicated by the cell reselection parameter indication information include time information about providing a service by a neighboring cell, the terminal determines a target cell based on the time information about providing the service by the neighboring cell, and performing the cell reselection based on the target cell determined

S51

FIG. 6

in a case that the one or more cell reselection parameters indicated by the cell reselection parameter indication information include time information about providing a service by a neighboring cell, and parameter information about the cell reselection performed by applying a criterion R, the terminal determines a target cell based on the time information about providing the service by the neighboring cell and/or the criterion R, and performs the cell reselection based on the target cell determined

S61

FIG. 7

in a case that the cell reselection parameter indication information is configured to indicate one cell reselection parameter, where the one cell reselection parameter is parameter information about the cell reselection performed by applying a criterion R, the terminal determines a target cell based on the criterion R and performs the cell reselection based on the target cell determined

S71

FIG. 8

in a case that the one or more cell reselection parameters indicated by the cell reselection parameter indication information include a location parameter of a serving cell, the terminal measures a neighboring cell based on location information of the terminal and the location parameter of the serving cell, and performs the cell reselection based on a measurement result

S81

FIG. 9

in a case that the one or more cell reselection parameters indicated by the cell reselection parameter indication information include a location parameter of a serving cell, and parameter information about the cell reselection performed by applying a criterion S, the terminal measures a neighboring cell based on a signal quality of the serving cell, and at least one of location information of the terminal and the location parameter of the serving cell, and performs the cell reselection based on a measurement result

S91

FIG. 10

in a case that the cell reselection parameter indication information is configured to indicate one cell reselection parameter, where the one cell reselection parameter is parameter information about the cell reselection performed by applying a criterion S, the terminal measures a neighboring cell based on a signal quality of a serving cell, and performs the cell reselection based on a measurement result

S101

FIG. 11

in a case that the one or more cell reselection parameters indicated by the cell reselection parameter indication information include a location parameter of a neighboring cell, the terminal determines a target cell based on location information of the terminal and the location parameter of the neighboring cell, and performs the cell reselection based on the target cell determined

S111

FIG. 12

in a case that the one or more cell reselection parameters indicated by the cell reselection parameter indication information include a location parameter of a neighboring cell and parameter information about the cell reselection performed by applying a criterion R, the terminal determines a target cell based on the criterion R, and at least one of location information of the terminal and the location parameter of the neighboring cell, and performs the cell reselection based on the target cell determined

S121

FIG. 13

in a case that the one or more cell reselection parameters indicated by the cell reselection parameter indication information include a location parameter of a neighboring cell and parameter information about the cell reselection performed by applying a criterion R, the terminal determines a target cell based on the criterion R, and performs the cell reselection based on the target cell determined

S131

FIG. 14

transmitting a signaling indication, wherein the signaling indication is configured to indicate one or more cell reselection parameters among the one or more cell reselection parameters indicated by the cell reselection parameter indication information

S141

FIG. 15

receiving a signaling indication, where the signaling indication is configured to indicate one or more cell reselection parameters among the one or more cell reselection parameters indicated by the cell reselection parameter indication information

S151

measuring a neighboring cell and/or determining a target cell based on the one or more cell reselection parameters indicated by the signaling indication

S152

FIG. 16

in a case that the one or more cell reselection parameters indicated by the cell reselection parameter indication information include a plurality of cell reselection parameters, the terminal performs the cell reselection by selecting one or more cell reselection parameters among the plurality of cell reselection parameters indicated by the cell reselection parameter indication information based on configuration information of the terminal

S161

FIG. 17

in a case that the one or more cell reselection parameters indicated by the cell reselection parameter indication information include time information about providing a service by a serving cell, location parameter of the serving cell, time information about providing a service by a neighboring cell, location parameter of the neighboring cell, parameter information about the cell reselection performed by applying a criterion S, and parameter information about the cell reselection performed by applying a criterion R, the terminal performs the cell reselection based on the criterion S and the criterion R

S171

FIG. 18

100

receiving unit — 101

processing unit — 102

FIG. 19

200

transmitting unit — 201

FIG. 20

304

302    300

memory    processing
component

communication
component

316

306

power
component

processor

308

320

multimedia
component

sensor
component

314

310

audio
component

I/O interface

312

FIG. 21

<u>400</u>

FIG. 22

## INTERNATIONAL SEARCH REPORT

| International application No. |
|---|
| **PCT/CN2021/088514** |

| A. | CLASSIFICATION OF SUBJECT MATTER |
|---|---|
| | H04W 48/20(2009.01)i |

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

DWPI, CNPAT, CNKI, 3GPP: 服务时间, service time, S准则, S critiria , R准则, R criteria, 位置, position, location, NTN, 非陆地网络, non-terrestrial networks, 小区, 重选, 选择, cell , reselection, selection, 距离, distance

| C. | DOCUMENTS CONSIDERED TO BE RELEVANT | |
|---|---|---|
| Category* | Citation of document, with indication, where appropriate, of the relevant passages | Relevant to claim No. |
| X | WO 2020231123 A1 (LG ELECTRONICS INC.) 19 November 2020 (2020-11-19) claims 1 and 8 | 1, 17, 20-23 |
| Y | WO 2020231123 A1 (LG ELECTRONICS INC.) 19 November 2020 (2020-11-19) claims 1 and 8 | 2-16, 18-19 |
| Y | XIAOMI. "Cell selection and reselection enhancements for NTN" *3GPP TSG RAN WG2 #113bis, R2-2103135*, 02 April 2021 (2021-04-02), sections 2.1.2, 2.1.3 and 2.2 | 2-16, 18-19 |
| X | CN 105594291 A (HUAWEI TECHNOLOGIES CO., LTD.) 18 May 2016 (2016-05-18) claims 1 and 3 | 1, 17, 20-23 |
| Y | CN 105594291 A (HUAWEI TECHNOLOGIES CO., LTD.) 18 May 2016 (2016-05-18) claims 1 and 3 | 2-16, 18-19 |
| Y | XIAOMI. "Enhancements on cell selection/reselection for earth moving and fixed beams" *3GPP TSG RAN WG2 #113, R2-2100811*, 15 January 2021 (2021-01-15), sections 2.1 and 2.2 | 2-16, 18-19 |
| A | CN 105323829 A (ZTE CORP.) 10 February 2016 (2016-02-10) entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2022** | **19 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/088514**

| Patent document cited in search report | | | Publication date (day/month/year) | Patent family member(s) | Publication date (day/month/year) |
|---|---|---|---|---|---|
| WO | 2020231123 | A1 | 19 November 2020 | None | |
| CN | 105594291 | A | 18 May 2016 | None | |
| CN | 105323829 | A | 10 February 2016 | None | |

Form PCT/ISA/210 (patent family annex) (January 2015)